Europäisches Patentamt

(19) European Patent Office

Office européen des brevets

(11) Publication number: **0 019 018**
**B1**

(12) **EUROPEAN PATENT SPECIFICATION**

(45) Date of publication of patent specification: **12.12.84**

(21) Application number: **79300806.1**

(22) Date of filing: **10.05.79**

(51) Int. Cl.³: **B 23 B 29/034**

(54) **Boring tools.**

(43) Date of publication of application:
**26.11.80 Bulletin 80/24**

(45) Publication of the grant of the patent:
**12.12.84 Bulletin 84/50**

(84) Designated Contracting States:
**CH DE FR IT NL SE**

(56) References cited:
**FR-A- 759 981**
**FR-A- 919 069**
**FR-A-1 580 843**
**US-A-2 712 686**
**US-A-3 256 755**

(73) Proprietor: **Newman, John Michael Waltrich**
**Wells House Parsonage Lane Farnham Common**
**Buckinghamshire (GB)**

(72) Inventor: **Newman, John Michael Waltrich**
**Wells House Parsonage Lane Farnham Common**
**Buckinghamshire (GB)**

(74) Representative: **Moss, Bernard Joseph et al**
**D.Young & Co. 10 Staple Inn**
**London, WC1V 7RD (GB)**

Courier Press, Leamington Spa, England.

## Description

This invention relates to boring tools in which the cutting diameter can be adjusted.

It has been proposed in US—A—3256755 to provide a boring tool comprising a body supporting outwardly extending cutting blades and housing blade advancing means for moving the blades outwardly or inwardly to adjust the cutting diameter. The blades are mounted in guides screwed into holes in the body and the blade advancing member is linearly movable through a gear train comprising a worm and a worm wheel, the worm wheel being axially fixed and having an internal thread engaging an external thread on a spindle part of the blade advancing member.

This blade advancing member has four planar sides provided with slideways for guiding shoes or wedging cams for transmitting adjustment movement to the blades from the blade advancing member. Thus the blades can only be adjusted in position *via* a number of cooperating drive surfaces.

However the prime requirement of a boring tool of the kind to which the present invention relates is accuracy of the cutting diameter. This requirement not only necessitates fine adjustment means but a minimum number of interengaging drive surfaces to maintain aggregated tolerances in manufacture to the minimum and to avoid unacceptable back-lash. The present invention reduces the number of such surfaces compared with the prior art, to improve accuracy.

FR—A—919069 discloses a boring tool in which the blades have planar side faces slidably located by cooperating faces of recesses in the tool body and in which the blade advancing member has a helical threaded shank engaged by two screws which are rotatable to displace the member and hence the blades. This boring tool also requires the use of a considerable number of drive and bearing surfaces which can wear and reduce accuracy.

According to the present invention there is provided a boring tool comprising a body supporting a plurality of cutting blades such that the blades are movable along paths equally inclined at an acute angle to an axis of rotation of the body, the outer ends of the blades having cutting edges and projecting beyond the body, and a blade advancing member within the body for carrying a head within a cavity in the body having a screwed shaft and being located within a bore coaxial with the axis of rotation of the body, the head being in use in contact with the inner ends of the cutting blades and meshing with a worm within the body on an axis at right angles to the axis of rotation and being rotatable from outside the body so as to rotate the worm wheel to advance or retract the blade advancing member, characterised in that each blade is of constant cross-section along substantially its entire length, and is located and slidable within a surrounding cylindrical hole extending through the wall of the body surrounding the cavity, the blade advancing member is provided with a single conical blade contacting surface and is rotatable within a threaded portion of the bore and the worm wheel is slidably mounted on a portion of the shank so as to be rotatable therewith, whereby rotation of the worm causes the shank, the head and the cutting blades to advance, and the cavity has an open end closed by a plug backing a frusto-conical pressure pad facing the blade advancing member and, in use, retaining and preventing rotational movement of the cutter blades.

An embodiment of the invention will now be more fully described, by way of example, with reference to the attached drawing wherein:—

Figure 1 shows a longitudinal section of the boring tool,

Figure 2 shows a section on the line II—II in Figure 1, and

Figure 3 shows an elevation of an adaptor.

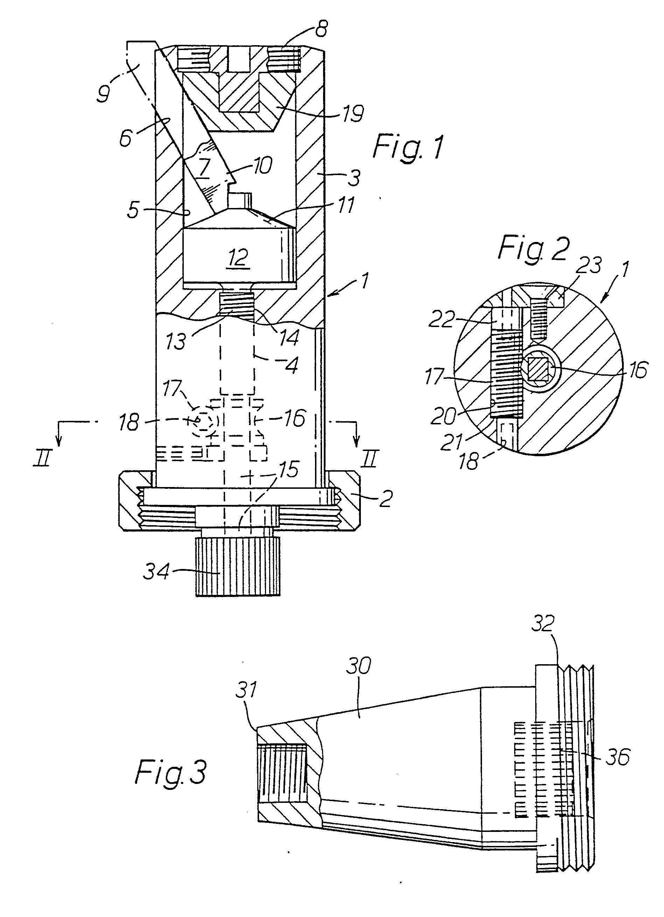

The tool shown in Figures 1 and 2 of the drawings comprises a cylindrical body 1 which comprises a ring nut 2 at one end, for mounting in an adaptor to be later described so that the tool may be connected to a chuck or drive means of a drilling or boring machine for rotation about its cylindrical axis. A bore 4 extends longitudinally through the body and is widened at the other end 3 of the body to form a cylindrical cavity 5. A plurality of cylindrical holes 6 of circular cross-section are formed at the end 3 of the body through the cavity wall, each hole lying at an acute angle to the body axis. The holes are equispaced to form slideways for at least three or four cutter blades 7 (only one being shown in Figure 1) which are retained by a screwed end plug 8 which backs a pressure pad 19 within the cavity and having a coned surface to guide the blades. The outer ends of the blades, which project beyond the body are ground to provide cutting edges and the inner ends 10 of the blades abut a conical surface of a head 11 of a blade advancing member 12. To prevent the blades rotating in the holes, each has a longitudinal flat formed on its surface to engage the coned surface of the pressure pad.

The head 11 of the member 12 is carried on one end of a screwed shank 13 mounted within a threaded portion 14 of the bore 4. The other end of the shank carries a square-section shaft 15 having a diagonal dimension less than the bore diameter. The shank carries a worm wheel 16 slidable thereon and meshing with a worm 17 rotatably carried in an open ended drilling 20 in the body on an axis at right-angles to the axis of rotation of the body. The worm has a socket 18 in its spindle to receive a removable key (not shown) by means of which it can be rotated. To locate the worm axially the drilling has a shoulder 21 at one end and is provided with a bush 22 at the other end secured by a retainer 23.

Rotation of the worm by the key causes corresponding rotation of the worm wheel, and thus the shaft of the member 12 resulting in axial movement of the head 11 to advance or retract the blades equally. Thus the diameter of a hole cut by the blades during rotation of the tool can be adjusted accurately and to within fine limits.

In one example of such a tool the shank 13 is screwed with a pitch of 1.25 mm, the worm wheel has 25 teeth and the worm is threaded at a pitch of 1.25 mm. In this example, one complete rotation of the worm causes a variation in the blade setting diameter of 0.635 mm so that a variation of as little as 0.00635 mm can be achieved. Moreover the worm gearing produces a mechanical advantage which locks the setting and prevents a loss of adjustment when the teeth are under load.

To ensure that the blades follow the head on retraction, biassing means such as springs can be incorporated to urge the blades inwardly.

The tool adapter 30 as shown in Figure 3 is largely of frusto-conical shape and at its smaller end 31 is internally threaded for mounting on the shaft of a power tool. At its large end, the surface 32 of the adapter is of cylindrical shape and is screw threaded to engage a ring nut 2 on the tool. A knurled or serrated spigot 34 on the tool engages within a similarly knurled or serrated cylindrical recess 36 in the end 32 of the adaptor to provide a positive rotational drive from the adaptor to the tool.

## Claims

1. A boring tool comprising a body (1) supporting a plurality of cutting blade (7) such that the blades are movable along paths equally inclined at an acute angle to an axis of rotation of the body, the outer ends (9) of the blades having cutting edges and projecting beyond the body, and a blade advancing member (12) within the body for carrying a head (11) within a cavity (5) in the body having a screwed shaft (13) and being located within a bore (4) coaxial with the axis of rotation of the body, the head being in use in contact with the inner ends (10) of the cutting blades and meshing with a worm (17) within the body on an axis at right angles to the axis of rotation and being rotatable from outside the body so as to rotate the worm wheel to advance or retract the blade advancing member, characterised in that each blade is of constant cross-section along substantially its entire length, and is located and slidable within a surrounding cylindrical hole (6) extending through the wall of the body surrounding the cavity, the blade advancing member (12) is provided with a single conical blade contacting surface and is rotatable within a threaded portion (14) of the bore (4) and the worm wheel (16) is slidably mounted on a portion (15) of the shank (13, 15) so as to be rotatable therewith, whereby rotation of the worm causes the shank (13, 15), the head (11) and the cutting blades to advance, and the cavity has an open end closed by a plug (8) backing a frusto-conical pressure pad (19) facing the blade advancing member and, in use, retaining and preventing rotational movement of the cutter blades.

2. A boring tool according to claim 1, characterised in that the worm is rotatable by a detachable handle or key.

3. A boring tool according to claim 1 or claim 2, characterised in that a serrated drive spigot (34) co-axial with the axis of rotation of the tool is mounted on the end of the body remote from the cutting blades and for insertion within a corresponding socket (36) in a drive adaptor (30), the tool being detachably securable to the adaptor by a ring nut (2) engageable with a screw-threaded portion (32) of the adaptor.

4. A boring tool according to claim 3, characterised in that the adaptor (30) has a threaded hole (31) to engage the screwed end of a power drill drive shaft.

## Patentansprüche

1. Bohrwerkzeug mit einem Körper (1), der mehrere Schneidblätter (7) derart trägt, daß die Blätter entlang in einem spitzen Winkel zu der Drehachse des Körpers gleich geneigten Wegen bewegbar sind, wobei die Außenenden (9) der Blätter Schneidkanten haben und über den Körper hinausragen, und mit einer Schneidblattvortriebeinrichtung (12) in dem Körper zum Tragen eines Kopfes (11) in einem Hohlraum (5) in dem Körper, die eine mit Gewinde versehene Welle (13) besitzt und in einer mit der Drehachse des Körper koaxialen Bohrung (4) angeordnet ist, wobei der Kopf in Verwendung in Berührung mit den inneren Enden (10) der Schneidblätter und in Kupplungseingriff mit einer Schraube (17) in dem Körper auf einer Achse in rechten Winkeln zu der Drehachse steht und von außerhalb des Körpers derart drehbar ist, daß das Schneckenrad gedreht wird, um die Schneidblattvortriebseinrichtung vorzurücken oder zurückzuziehen, dadurch gekennzeichnet, daß jedes Schneidblatt von konstantem Querschnitt entlang im wesentlichen seiner gesamten Länge ist und gleitbar innerhalb einer umgebenden zylindrischen Ausnehmung (6) angeordnet ist, welche sich durch die Wand des den Hohlraum umgebenden Körpers erstreckt, die Schneidblattvortriebseinrichtung (12) mit einer einzelnen kegelförmigen Schneidblattkontaktfläche versehen und in einem mit Schraubgewinde versehenen Abschnitt (14) der Bohrung (4) drehbar angeordnet ist und das Schneckenrad (16) auf einem Teil (15) des Schaftes (13, 15) derart gleitbar befestigt ist, daß es mit ihm drehbar ist, wobei eine Drehung der Schraube bewirkt, daß der Schaft (13, 15), der Kopf (11) und die Schneidblätter vorrücken, und der Hohlraum eine offenes Ende hat, das mit einem Stopfen (8) verschlossen ist, auf dessen Rückseite ein kegelstumpfförmiger Niederhalter (19) sich befindet, der zu der Schneidblattvortriebeinrichtung hin gerichtet ist und bei der Verwendung eine Drehbewegung der Schneidblätter anhält und verhindert.

2. Bohrwerkzeug nach Anspruch 1, dadurch gekennzeichnet, daß die Schraube durch einen abnehmbaren Handgriff oder Schlüssel drehbar ist.

3. Bohrwerkzeug nach Anspruch 1 oder Anspruch 2, dadurch gekennzeichnet, daß ein sägeartig gezahnter Antriebszapfen (34) koaxial mit der Drehachse des Werkzeuges auf dem von den Schneidblättern entfernten Ende des Körpers für ein Einsetzen in eine entsprechende Muffe (36) in einem Antriebspaßstück (30) befestigt ist, wobei das Werkzeug lösbar mit dem Paßstück durch eine Ringmutter (2), die in einen mit Gewinde versehenen Abschnitt (32) des Paßstückes eingreift, verbindbar ist.

4. Bohrwerkzeug nach Anspruch 3, dadurch gekennzeichnet, daß das Paßstück (30) eine mit Gewinde versehene Ausnehmung (31) aufweist, um das mit Gewinde versehene Ende einer Motorbohrerantriebswelle aufzunehmen.

**Revendications**

1. Outil de perçage comprenant un corps (1) supportant une pluralité de lames de coupe (7), de sorte que les lames soient mobiles le long de passages inclinés selon un même angle aigu par rapport à un axe de rotation du corps, les parties externes (9) des lames ayant des bords coupant et s'étendant au-delà du corps et un organe de sortie de lames (12) faisant partie du corps pour supporter une tête (11) à l'intérieur d'une cavité (5) du corps, présentant un arbre fileté (13) étant situé dans un trou de perçage (14) coaxial à l'axe de rotation du corps, lors de l'utilisation la tête étant en contact avec des extrémités internes (10) des lames de coupe et s'engrenant avec une vis sans fin (17) située à l'intérieur du corps sur un axe perpendiculaire à l'axe de rotation et étant susceptible d'être tourné à partir de l'extérieur du corps de façon à faire tourner une roue appartenant à la vis sans fin pour sortir ou rétracter l'organe de sortie de lames, caractérisé en ce que chaque lame a une section constante selon pratiquement toute sa longueur et est logée de façon mobile à l'intérieur d'un trou cylindrique (6) qui l'entoure et qui s'étend à travers la paroi du corps entourant la cavité, l'organe de sortie de la lame (12) est pourvu d'une seule surface de contact pour la lame conique et peut être entraîné en rotation à l'intérieur d'une partie filetée (14) du trou de perçage (4) et la roue (16) de la vis sans fin est montée à coulissement sur une partie (15) d'une tige (13, 15), de sorte à pouvoir tourner avec elle et en ce que la rotation de la vis sans fin, provoque l'avancement de la tige (13, 15), de la tête (11) et des lames de coupe et la cavité possède une extrémité ouverte, fermée par un bouchon (8) constituant un tampon de pression (19) tronconique faisant face à l'organe de sortie de la lame, et en position d'utilisation, retenant et empêchant tous mouvements de rotation des lames de coupe.

2. Outil de perçage selon la revendication 1, caractérisé en ce que la vis sans fin est entraînée en rotation grâce à une poignée détachable ou clef.

3. Outil de perçage selon la revendication 1 ou 2, caractérisé en ce qu'un bouton d'entraînement moleté (34) coaxial à l'axe de rotation de l'outil est monté sur l'extrémité du corps éloignée des lames de coupe et pour insertion à l'intérieur d'une douille correspondante (36), dans un adaptateur d'entraînement (30), l'outil étant fixé de façon détachable à l'adaptateur par un écrou en anneau (2) engageable avec une partie filetée (32) de l'adaptateur.

4. Outil de perçage selon la revendication 3, caractérisé en ce que l'adaptateur (30) possède un trou taraudé (31) dans lequel s'engage l'extrémité filetée d'un arbre d'entraînement de forêt de perceuse.

0019018

Fig. 1

Fig 2

Fig. 3